# EUROPÄISCHE PATENTSCHRIFT

(11) **EP 2 249 120 B1**
(45) Veröffentlichungstag und Bekanntmachung des Hinweises auf die Patenterteilung: **14.03.2012**
(21) Anmeldenummer: 09179993.2
(22) Anmeldetag: 18.12.2009
(51) Int. Cl.: G01B 5/00, B25B 5/00

(54) **Lagervorrichtung**
Jig
Dispositif de fixation

(30) Priorität: 05.05.2009 DE 202009006429 U
(43) Veröffentlichungstag der Anmeldung: 10.11.2010
(73) Patentinhaber: Eiblmeier, Hermann, 94431 Grossköllnbach (DE)
(72) Erfinder: Eiblmeier, Hermann, 94431 Grossköllnbach (DE)
(74) Vertreter: Schurack, Eduard F.

(56) Entgegenhaltungen:
- EP-A2- 1 832 220
- DE-A1- 4 035 581
- DE-A1-102004 010 033
- DE-U1- 20 214 901
- DE-U1-202006 006 036

## Beschreibung

Die vorliegende Erfindung betrifft eine Lagervorrichtung zum Fixieren eines Einspannguts zum Zwecke der Vermessung des Einspannguts, wobei das Einspanngut mit mindestens einem Fixierzapfen gekoppelt ist.

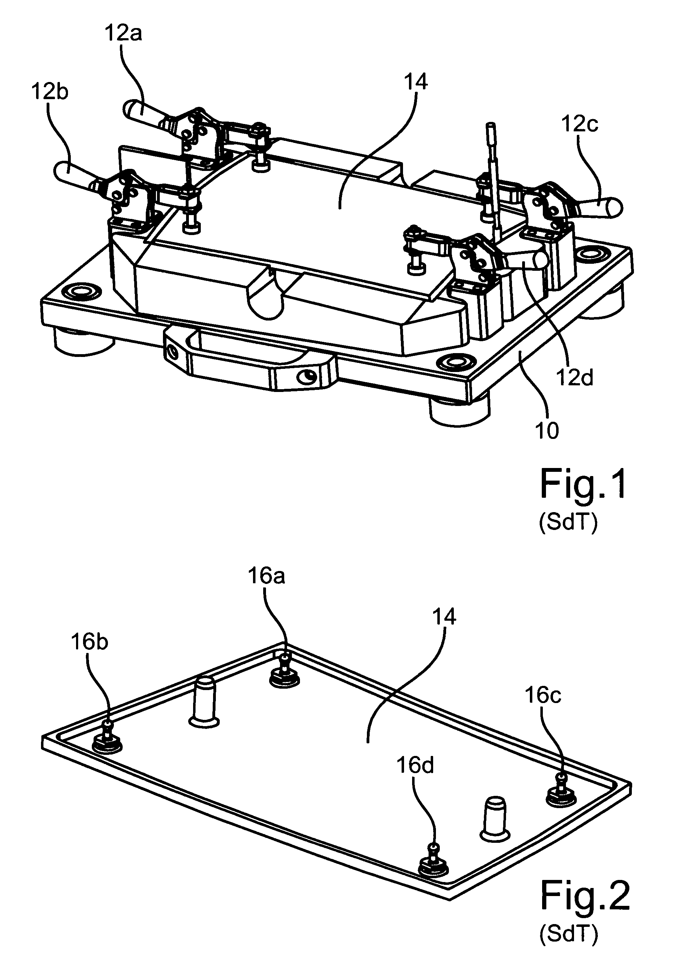

Im Nachfolgenden wird die der vorliegenden Erfindung zugrunde liegende Problematik am Beispiel der Fixierung von Fahrzeugbauteilen in Lagervorrichtungen zum Zwecke der taktilen oder optischen Vermessung näher erläutert. In diesem Zusammenhang ist in Fig. 1 eine aus dem Stand der Technik bekannte Lagervorrichtung 10 dargestellt, bei der vier Spannvorrichtungen 12a bis 12d verwendet werden, um das Einspanngut 14, vorliegend eine Lautsprecherverblendung einer Instrumententafel, in Fahrzeuglage aufzunehmen und zu fixieren. Bei der in Fig. 1 dargestellten Lagervorrichtung 10 ergeben sich diverse Nachteile: Zunächst wird das Einlegen des Einspannguts 14 durch die Spannvorrichtungen 12a bis 12d erschwert, da diese in den Bereich der Lagervorrichtung 10 hineinragen, in den das Einspanngut 14 aufzunehmen ist. Dies führt in der Praxis dazu, dass das Einspanngut 14 an den Spannvorrichtungen 12a bis 12d angeschlagen wird, wodurch sich Beschädigungen ergeben können. Überdies besteht, wenn das Einspanngut Kabel umfasst, die Gefahr, dass sich die Kabel mit den Spannvorrichtungen 12a bis 12d verheddern. Dies resultiert in Zeitverlust und der Gefahr von Beschädigungen der Kabelverbindungen auf dem Einspanngut 14.

Generell sollte sich das Einspanngut 14 für eine möglichst exakte Vermessung in seiner Montageposition befinden. In diesem Zusammenhang ist es mit den Spannvorrichtungen 12a bis 12d gemäß Fig. 1 äußerst schwierig, stehende Positionen oder Überkopfpositionen abzubilden. Das Einspanngut 14 muss beispielsweise bei Überkopfposition von Hand gehalten werden und anschließend müssen die vier Spannvorrichtungen 12a bis 12d am besten gleichzeitig - was nicht möglich ist - oder in einer festgelegten Reihenfolge geschlossen werden. Die Reihenfolge ist wichtig, um das Einspanngut nicht zu verspannen, da dies zu Deformationen und damit zu unbrauchbaren Messergebnissen führen würde.

Unter Verwendung der in Fig. 1 dargestellten Lagervorrichtung 10 können bei der taktilen, das heißt tastenden, Messtechnik Umrisse oder Oberflächen nicht vollständig geprüft werden, da die Spannvorrichtungen 12a bis 12d diese Flächen verdecken oder unzugänglich machen. Auch bei Verwendung für die optische, berührungslose Messtechnik sind die Spannvorrichtungen 12a bis 12d ebenfalls ein Hindernis, weil viele Flächenbereiche und Kanten abgeschottet werden und Schatten bei den Messungen erzeugen.

Ein weiteres Problem stellt der durch die Spannvorrichtungen 12a bis 12d auf das Einspanngut 14 ausgeübte Anpressdruck dar. Ist der Anpressdruck zu hoch, wird das Einspanngut 14 deformiert. Ist der Anpressdruck zu niedrig, liegt das Einspanngut 14 nicht richtig auf den Auflagen auf, die sich in Fig. 1 unterhalb des Einspannguts 14 befinden.

Aus der DE 20 2006 006 036 U1 ist eine Vorrichtung zum Aufspannen einer Messeinrichtung bekannt. Insbesondere soll die Maßhaltigkeit von größeren Blechteilen kontrolliert werden. Dazu sind auf einem Messtisch mehrere Säulen befestigt, auf die ein Schnittstellenelement aufgesteckt wird. Auf dem Schnittstellenelement kann mittels Schreiben eine zeichnerisch nicht dargestellte Messeinrichtung befestigt werden. Das Schnittstellenelement weist eine Aufnahmebohrung auf, in die eine Säule eingeführt wird. Die Säule weist einen Kugelkopf auf, der mit zwei Spannelementen zum Fixieren der Säule in dem Schnittstellenelement zusammenwirkt.

Die DE 10 2004 010 033 A1 betrifft eine Messeinrichtung mit einer Vielzahl von Messdosen, wobei in die Messdosen ein Messarm eingesetzt werden kann. In jeder Messdose ist eine Spanneinrichtung vorgesehen, die integrierte Spannbacken aufweist, um einen Zapfen des Messarmfußes in die Aufnahme einer Messdose hineinzuziehen. Die Spannbacken können pneumatisch oder mechanisch betätigbar sein.

Die DE 40 35 581 A1 betrifft eine Buchse für eine Kupplung, wobei ein Stecker mittels eines Verriegelungselements in einer Kupplungsbuchse befestigbar ist.

Aus der EP 1 832 220 A2 ist ein Kupplungsmechanismus zum Verbinden zweier medizinsicher Instrumente bekannt, der mindestens eine federbelastete Rastverbindung umfasst.

Aus der DE 202 14 901 U1 ein Schnellanschluss für eine Munddusche mit einem Kupplungsmechanismus bekannt.

Die Aufgabe der vorliegenden Erfindung besteht deshalb grundsätzlich darin, eine Lagervorrichtung bereitzustellen, die eine möglichst umfassende und präzise Vermessung eines Einspannguts ermöglicht.

Diese Aufgabe wird gelöst durch eine Lagervorrichtung mit den Merkmalen von Patentanspruch 1.

Die vorliegende Erfindung basiert auf der Erkenntnis, dass viele zu vermessende Bauteile, insbesondere Fahrzeugbauteile im Interieurbereich eines Fahrzeugs, in ihrer Montageposition "eingeclipst" werden, wozu die Bauteile mit Fixierzapfen versehen sind, die in einen entsprechenden Schnappmechanismus einrasten. Fig. 2 zeigt in diesem Zusammenhang die Unterseite eines Einspannguts 14, das zur Fixierung an einer Instrumententafel 4 Fixierzapfen 16a bis 16d aufweist. Ein Fixierzapfen 16 weist demnach von seinem distalen Ende beabstandet einen Bereich mit einem geringeren Durchmesser auf als ein Bereich seines distalen Endes.

Um diesen Fixierzapfen 16 für das Aufnehmen und Fixieren eines Einspannguts 14, das mindestens einen derartigen Fixierzapfen 16 umfasst, zu verwenden, weist eine Spannvorrichtung einer erfindungsgemäßen Lagervorrichtung eine Einführseite mit einer Einführöffnung für den Fixierzapfen auf. Sie umfasst weiterhin eine Montageseite zur Montage der Spannvorrichtung auf einer Stützfläche. An die Einführöffnung schließt sich ein Kanal an, der sich zumindest in die Spannvorrichtung hineinerstreckt, wobei der Kanal eine Längsachse und einen Kanaldurchmesser in einer ersten Richtung senkrecht zu seiner Längsachse aufweist. Eine Spannvorrichtung umfasst mindestens eine Riegelvorrichtung, die in der ersten Richtung senkrecht zur Kanalachse derart beweglich gelagert ist, dass sie mit einem kanalseitigen Ende in den Kanal eindringen kann, sowie mindestens eine Federvorrichtung, die mit der mindestens einen Riegelvorrichtung gekoppelt ist, um die mindestens eine Riegelvorrichtung in die erste Richtung senkrecht zur Kanalachse mit einer Federkraft zu beaufschlagen.

Zur Aufnahme und Fixierung eines wie in Fig. 2 dargestellten Einspannguts 14 wird erfindungsgemäß eine Lagervorrichtung mit vier Spannvorrichtungen bereitgestellt. Die Fixierzapfen 16a bis 16d werden insbesondere durch eine einzige Bewegung im Wesentlichen gleichzeitig in die entsprechenden Spannvorrichtungen eingeclipst. Dadurch ergeben sich diverse Vorteile: Zunächst ist das Einspanngut sowohl für die taktile als auch die optische Messtechnik frei zugänglich. Alle Außenflächen und die Berandung können umlaufend und ohne Unterbrechung erfasst und ausgewertet werden, bei der taktilen Messtechnik beispielsweise unter Verwendung eines Prüflineals oder eines Prüfstifts. Das Einspanngut kann ohne Probleme in beliebiger Einbaulage aufgenommen werden, beispielsweise auch in Überkopfposition durch eine einzige Bedienperson. Das Einspanngut kann nicht durch eine falsche Spannreihenfolge verspannt oder deformiert werden. Insbesondere ergibt sich durch die Verwendung einer derartigen Spannvorrichtung eine äußerst hohe Reproduzierbarkeit. Bei der Überprüfung einer vollständigen Serie - alternativ könnte auch nur eine Stichprobe überprüft werden - wird überdies sichergestellt, dass sämtliche Fixierzapfen aller zu prüfender Einspanngüter weder fehlen noch deformiert sind. Dadurch ergibt sich eine zusätzliche Qualitätskontrolle.

Bei einer bevorzugten Ausführungsform ist eine erste und eine zweite Riegelvorrichtung vorgesehen, die auf gegenüberliegenden Seiten des Kanals in der ersten Richtung angeordnet sind, wobei der ersten Riegelvorrichtung eine erste und der zweiten Riegelvorrichtung eine zweite Federvorrichtung zugeordnet ist. Hierdurch wird auf besonders einfache Art und Weise eine Zentrierung des Fixierzapfens sichergestellt. Bei einem außerhalb einer Sollposition angeordneten Fixierzapfen kann eine zuverlässige verspannungsfreie Fixierung des Einspannguts erfolgen (Fixierzapfen in der ersten Richtung verschoben); Toleranzen werden ohne Entstehung von Deformationen des Einspannguts abgefangen.

Bevorzugt ist die mindestens eine Riegelvorrichtung als Walze oder als Kugel ausgeführt. Dies ermöglicht ein äußerst kraftsparendes Einführen des Fixierzapfens mit Bezug auf die Spannvorrichtung, da der Fixierzapfen über eine derartige Riegelvorrichtung abrollen kann.

Die mindestens eine Federvorrichtung ist bevorzugt als elastischer Ring, insbesondere als Kugelring, als Spiralfeder, als Blattfeder oder als elastischer Block ausgeführt, oder auf der Basis von Druckluft realisiert und umfasst insbesondere bei dieser letztgenannten Ausgestaltung mindestens ein Druckluftventil. Beispielsweise kann über den Durchmesser eines Gummiring auf besonders einfache Weise die Federkraft eingestellt werden. Insgesamt ergeben sich somit unterschiedlichste Varianten zur präzisen Einstellung der Federkraft in Abstimmung auf das Einspanngut.

Besonders bevorzugt sind eine erste und eine zweite, als Walze ausgebildete Riegelvorrichtungen vorgesehen, wobei die erste und die zweite Federvorrichtung als mindestens ein elastischer Ring ausgeführt sind, der in einer jeweiligen Nut der jeweiligen Walze geführt ist. Durch diese Vorgehensweise realisiert ein einzelner elastischer Ring zwei Federvorrichtungen, das heißt jeweils eine Federvorrichtung für eine der Riegelvorrichtungen. Überdies kann bei entsprechender Ausbildung der Nut der jeweiligen Walze der elastische Ring auf einfache Art und Weise ausgewechselt werden, um ohne Zeitverlust eine Anpassung an das jeweilige Einspanngut vorzunehmen. Für eine besonders gleichmäßige Beaufschlagung der Walzen kann ein erster elastischer Ring für deren eines Ende und ein zweiter elastischer Ring für deren anderes Ende vorgesehen sein.

Bevorzugt ist auf der Montageseite einer derartigen Spannvorrichtung eine Befestigungsvorrichtung ausgebildet, wobei diese insbesondere mindestens ein Gewinde aufweist. Dies ermöglicht eine Montage einer derartigen Spannvorrichtung in einer erfindungsgemäßen Lagervorrichtung auf besonders effiziente Art und Weise.

Alternativ oder zusätzlich kann die Spannvorrichtung zur Befestigung auf der Lagervorrichtung mittels Befestigungsmitteln, insbesondere Schrauben, mindestens zwei Durchgangsbohrungen aufweisen. Auf diese Weise ist ebenfalls eine Montage einer derartigen Spannvorrichtung in einer vorgegebenen Lage auf der erfindungsgemäßen Lagervorrichtung ermöglicht.

Bevorzugt stellt die Vorrichtung mit einem Fixierzapfen eine Haltevorrichtung dar, wobei an der Einführseite der Spannvorrichtung eine Freimachung vorgesehen ist, um ein Verschieben der Haltevorrichtung relativ zur Spannvorrichtung zu ermöglichen. Dies erlaubt eine verspannungsfreie und damit deformationslose Fixierung des Einspannguts mittels der Haltevorrichtung an einer derartigen Spannvorrichtung.

An der Einführseite der Spannvorrichtung kann eine Zentriervorrichtung für die Vorrichtung mit einem Fixierzapfen, insbesondere für eine Haltevorrichtung mit einem Fixierzapfen, vorgesehen sein. Besonders bevorzugt ist eine derartige Zentriervorrichtung federnd gelagert. Auch dies ermöglicht eine verspannungsfreie, deformationslose Aufnahme des Einspannguts.

Der Kanalquerschnitt kann insbesondere kreisförmig oder länglich ausgebildet sein. Eine längliche Ausbildung stellt die Möglichkeit bereit, die Position des Fixierzapfens in der Richtung des Kanalquerschnitts mit größerer Länge spannungsfrei zu variieren.

Bei einer bevorzugten Weiterbildung ist die mindestens eine Riegelvorrichtung als Walze ausgebildet, wobei die Walze außerhalb eines Mittenbereichs einen konstanten Durchmesser aufweist und lediglich im Mittenbereich einen kugelförmigen Bereich mit einem Durchmesser kleiner oder gleich dem konstanten Durchmesser, wobei die Walze an den kugelförmigen Bereich anschließend auf jeder Seite des kugelförmigen Bereichs einen Bereich mit einem Durchmesser, der geringer ist als der konstante Durchmesser, aufweist. Dadurch wird ein zuverlässiger Halt des Einspannguts auch bei verkantet eingesetztem Fixierzapfen ermöglicht.

Bei einer weiteren bevorzugten Ausführungsform sind auf der Einführseite mindestens vier optische Kontrollpunkte angeordnet, die mit der Längsachse des Kanals korreliert sind. Durch die Vermessung der vier optischen Kontrollpunkte ist eine Ebene eindeutig definiert und damit die Orientierung des Kanals einer derartigen Spannvorrichtung. Dies ermöglicht eine besonders präzise Positionsbestimmung.

Eine derartigen Spannvorrichtung lässt sich jedoch auch in Verbindung mit einer Haltevorrichtung mit einem Fixierzapfen zur Fixierung eines Einspannguts ohne eigene Fixierzapfen verwenden, wenn die Haltevorrichtung eine Koppelvorrichtung zum Koppeln mit einem Einspanngut aufweist. Je nach Ausbildung der Haltevorrichtung lässt sich dadurch eine Vielzahl weiterer Vorteile erzielen.

Durch den Übergangsbereich von einem Bereich des distalen Endes des Fixierzapfens mit maximalem Durchmesser zu einem Bereich mit Normdurchmesser - auf der von der Zapfenspitze abgewandten Seite - lässt sich durch entsprechende Dimensionierung, insbesondere einer vorgebbaren Länge des Übergangsbereichs sowie eine vorgebbare Kontur, welche insbesondere Pyramidenform, Kugelform, Rampenform oder Kegelform aufweisen kann, die Kraft einstellen, mit der das Einspanngut gehalten wird, beziehungsweise die Kraft, die nötig ist, um das Einspanngut zu fixieren beziehungsweise zu lösen. Dies ermöglicht eine individuelle Anpassung an vorgebbare Parameter des Einspannguts, beispielsweise Toleranz, Material, Materialstärke usw.

Eine bevorzugte Ausführungsform einer derartigen Haltevorrichtung weist ein Gewinde und/oder einen Zentrierbund auf. Mittels des Gewindes ist eine Fixierung der Haltevorrichtung im Einspanngut ermöglicht. Dabei kann es sich um ein Außen- oder ein Innengewinde handeln. Ein optionaler Zentrierbund ermöglicht eine einfache Ausrichtung der Haltevorrichtung gegenüber dem Einspanngut.

Gemäß einer weiteren Ausführungsform weist die Koppelvorrichtung eine Nut zum Einhängen des Einspannguts auf. Dadurch kann ein Einspanngut auf materialschonende Weise fixiert werden, das kein Gewinde aufweist.

Es kann auch vorgesehen sein, dass die Koppelvorrichtung eine Klemmfläche zum Klemmen des Einspannguts zwischen die Haltevorrichtung und die Spannvorrichtung umfasst.

Bei einer weiteren Alternative umfasst die Koppelvorrichtung eine Klemmvorrichtung, insbesondere eine Klammer, zum Klemmen des Einspannguts an die Haltevorrichtung. Die Klammer kann federbeaufschlagt ausgeführt sein.

Bevorzugt ist der Fixierzapfen der Haltevorrichtung im Wesentlichen rund, halbrund, keilförmig, doppelkeilförmig, rampenförmig oder doppelrampenförmig ausgebildet. Dadurch können unterschiedliche Vorgaben hinsichtlich Toleranz und Freiheitsgraden bei der Fixierung präzise nachgebildet werden, wodurch sich eine besonders genaue Vermessung des Einspannguts ergibt.

Eine erfindungsgemäße Lagervorrichtung umfasst eine Stützfläche zur Montage der mindestens einen Spannvorrichtung und mindestens eine Richtungs- und/oder Winkelausgleichsvorrichtung, die zwischen die mindestens eine Spannvorrichtung und die Stützfläche gekoppelt ist. Diese kann eine Höhenausgleichsvorrichtung umfassen. Durch die Verwendung einer Höhenausgleichsvorrichtung lässt sich eine präzise Anpassung an die tatsächliche Lage des Einspannguts erzielen, so dass bei der Vermessung das Einspanngut ohne Spannungen und Deformierungen gelagert ist.

Eine bevorzugte Weiterbildung einer erfindungsgemäßen Lagervorrichtung umfasst mindestens eine Messfläche, die mindestens eines der beiden folgenden Kriterien erfüllt: Bei eingespanntem Einspanngut mit Sollmaßen ist die Messfläche in einem vorgebbaren Abstand zum Einspanngut angeordnet und/oder bei eingespanntem Einspanngut mit Sollmaßen ist die Höhe der Messfläche über der Stützfläche mit der Höhe des Einspannguts über der Stützfläche korreliert. Auf diese Weise kann unter Verwendung eines Messlineals oder eines Prüfstifts das Einspanngut komplett umlaufend geprüft werden. Mittels eines Haarlineals wird dabei der Bauteilunter- oder überstand prüfend festgestellt, während mit dem Prüfstift die Bauteilausdehnung, das heißt zu groß oder zu klein, prüfend festgestellt werden kann (definierter Abstand zwischen Einspanngut und ergänzenden Messflächen).

Weitere vorteilhafte Ausführungsformen ergeben sich aus den Unteransprüchen.

Im Nachfolgenden werden Ausführungsbeispiele einer erfindungsgemäßen Lagervorrichtung unter Bezugnahme auf die beigefügten Zeichnungen näher beschrieben. Es zeigen:
- Fig. 1: eine aus dem Stand der Technik bekannte Lagervorrichtung für ein Einspanngut;
- Fig. 2: ein aus dem Stand der Technik bekanntes Beispiel für ein Einspanngut;
- Fig. 3: in schematischer Darstellung ein erstes Beispiel einer Spannvorrichtung mit axialer Zentrierung;
- Fig. 4: in schematischer Darstellung ein zweites Beispiel einer Spannvorrichtung ohne Zentrierung;
- Fig. 5: in schematischer Darstellung ein drittes Beispiel einer Spannvorrichtung;
- Fig. 6: eine Querschnittsansicht der in Fig. 5 dargestellten Spannvorrichtung;
- Fig. 7: eine perspektivische Querschnittsansicht der Spannvorrichtung von Fig. 5 in Wirkverbindung mit einem ersten Ausführungsbeispiel eines Zapfens;
- Fig. 8: eine perspektivische Querschnittsansicht der Spannvorrichtung von Fig. 5 in Wirkverbindung mit einem zweiten Ausführungsbeispiel eines Zapfens;
- Fig. 9: drei Ausführungsbeispiele eines Zapfens, die ausgelegt sind, mit einer Spannvorrichtung zusammenzuwirken;
- Fig. 10: in schematischer Darstellung ein viertes Beispiel einer Spannvorrichtung mit einer Richtungszentrierung;
- Fig. 11: in schematischer Darstellung ein fünftes Beispiel einer Spannvorrichtung mit einer Zentrierung für Bohrungen und Langlöcher;
- Fig. 12: in schematischer Darstellung ein sechstes Beispiel einer Spannvorrichtung zur Aufnahme eines bereits am Einspanngut angeformten Zapfens;
- Fig. 13: in schematischer Darstellung ein siebtes Beispiel einer Spannvorrichtung zur Aufnahme eines bereits am Einspanngut angeformten Zapfens;
- Fig. 14: in schematischer Darstellung ein achtes Beispiel einer Spannvorrichtung mit vier optischen Kontrollpunkten;
- Fig. 15: in schematischer Darstellung ein erstes Beispiel einer Haltevorrichtung mit Griff;
- Fig. 16: in schematischer Darstellung ein zweites Beispiel einer Haltevorrichtung mit Außengewinde;
- Fig. 17: in schematischer Darstellung ein drittes Beispiel einer Haltevorrichtung mit Außengewinde;
- Fig. 18: in schematischer Darstellung ein viertes Beispiel einer Haltevorrichtung mit einer Nut zum Einhängen des Einspannguts;
- Fig. 19: in schematischer Darstellung ein fünftes Beispiel einer Haltevorrichtung ebenfalls mit einer Nut zum Einhängen des Bauteils;
- Fig. 20: in schematischer Darstellung ein sechstes Beispiel einer Haltevorrichtung mit einer Klemmfläche zum Klemmen des Einspannguts zwischen Haltevorrichtung und Spannvorrichtung;
- Fig.21: in schematischer Darstellung ein erstes Ausführungsbeispiel einer erfindungsgemäßen Lagervorrichtung; und
- Fig.22: in schematischer Darstellung ein zweites Ausführungsbeispiel einer erfindungsgemäßen Lagervorrichtung mit Messflächen.

In den nachfolgenden Ausführungen werden für gleiche und gleich wirkende Bauelemente dieselben Bezugszeichen verwendet. Diese werden der Übersichtlichkeit halber nur einmal eingeführt.

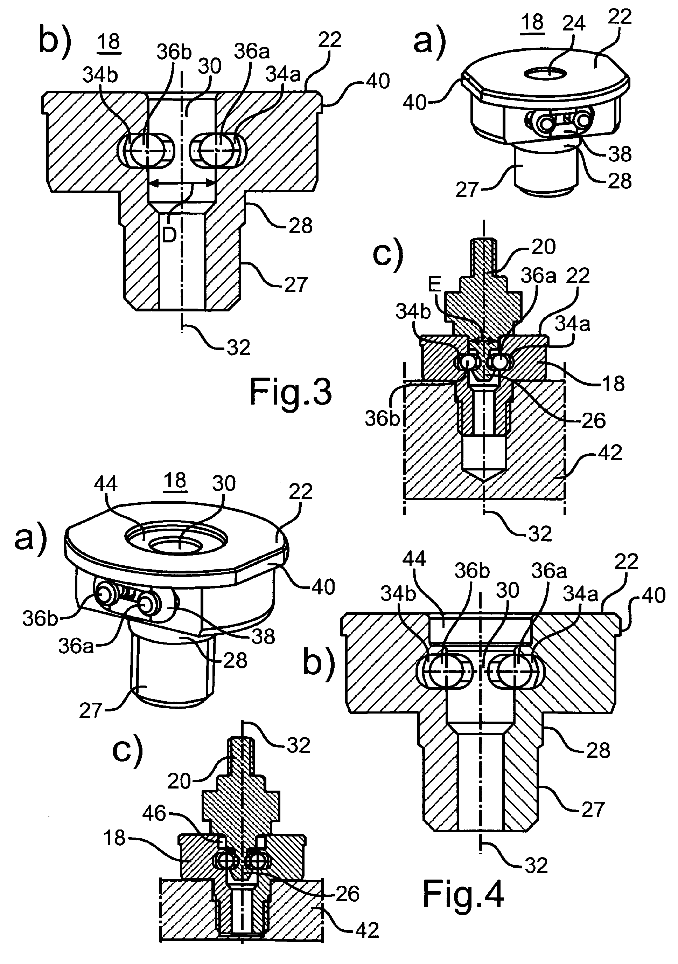

Fig.3 zeigt ein erstes Beispiel einer Spannvorrichtung 18, wobei Fig. 3a eine perspektivische Ansicht, Fig. 3b einen Querschnitt durch die Ansicht von Fig. 3a und Fig. 3c einen Querschnitt mit eingesetzter Haltevorrichtung 20 zeigt. Die Spannvorrichtung 18 weist eine Einführseite mit einer Auflagefläche 22 für die Haltevorrichtung 20 oder ein Einspanngut sowie eine Einführöffnung 24 für einen Fixierzapfen 26 auf. An einer Montageseite der Spannvorrichtung 18 ist ein Außengewinde 27 sowie ein Zentrierbund 28 vorgesehen. An die Einführöffnung 24 schließt sich ein Kanal 30 an, der als Bohrung oder Durchgangsbohrung ausgeführt sein kann. Der Kanal 30 weist eine Längsachse 32 auf sowie einen Kanaldurchmesser D in einer Richtung senkrecht zur Längsachse 32. In zwei wegbeschränkenden Langlöchern 34a, 34b, die insbesondere durch Ausfräsung herstellbar sind, sind zwei walzenförmige Spannrollen 36a, 36b vorgesehen, die in der ersten Richtung senkrecht zur Kanalachse 32 derart beweglich gelagert sind, dass sie zumindest mit ihrem kanalseitigen Ende in den Kanal 30 eindringen können. Jede Spannrolle 36a, 36b weist an ihren beiden Enden jeweils eine Nut auf, in die jeweils ein elastischer Ring 38 eingelegt ist, so dass der elastische Ring 38 als Federvorrichtung wirkt und die Spannrollen 36a, 36b in die erste Richtung senkrecht zur Kanalachse 32 mit einer Federkraft beaufschlagt.

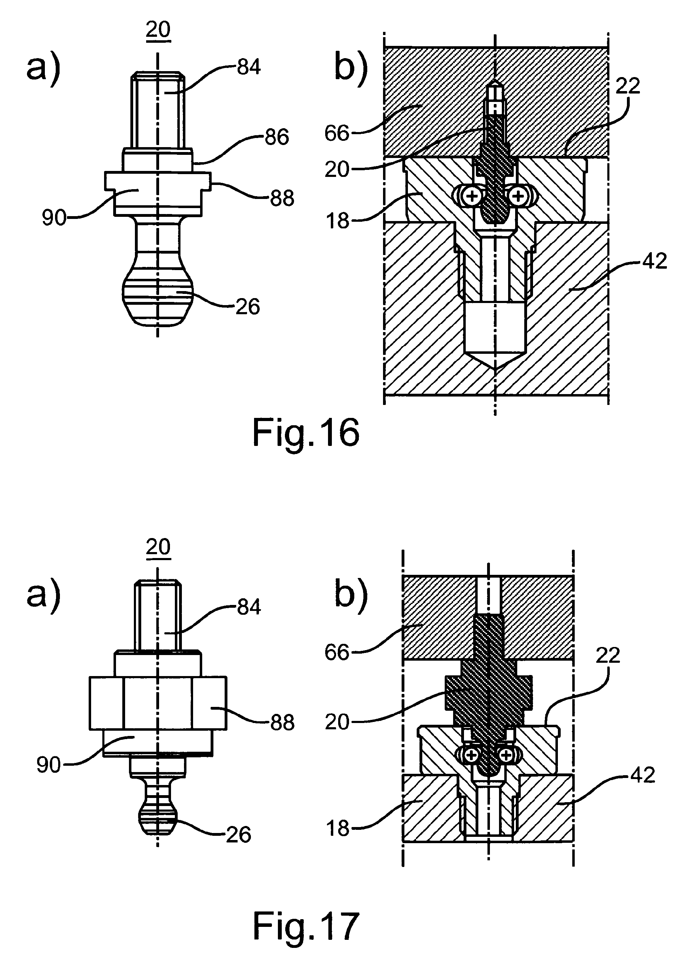

Auf die in Fig. 3c dargestellte Haltevorrichtung 20 wird mit Bezug auf Fig. 17 noch näher eingegangen werden. Anstelle des in Fig. 3a als Federvorrichtung verwendeten elastischen Rings 38 können, wie für den Fachmann offensichtlich, auch Spiralfedern, Blattfedern, elastische Blöcke verwendet werden oder eine Federkraft unter Verwendung von Pneumatik realisiert werden. Durch eine angefräste Schlüsselweite 40 kann die Spannvorrichtung 18 unter Verwendung eines geeigneten Schlüssels montiert werden. Durch die Abstimmung des Durchmessers E der Haltevorrichtung 20 an den Durchmesser D der Spannvorrichtung 18 ist vorliegend eine Zentrierung der Haltevorrichtung 20 mit Bezug auf die Spannvorrichtung 18 sichergestellt. Die Spannvorrichtung 18 ist gemäß Fig. 3c in eine Stützvorrichtung 42 eingeschraubt. Diese kann eine Montagefläche oder - unter Verwendung von Spannvorrichtungen einheitlicher Höhe - eine Höhenausgleichsvorrichtung sein.

Fig. 4 zeigt ein zweites Beispiel einer Spannvorrichtung 18, wobei sich die Spannvorrichtung 18 gemäß Fig. 4 von derjenigen gemäß Fig.3 dadurch unterscheidet, dass diese eine Freimachung 44 aufweist, die, siehe Fig.4c, einen Spielraum 46 für das Verschieben einer Haltevorrichtung 20 - und eines damit gekoppelten Einspannguts - gegenüber der Spannvorrichtung 18 ermöglicht.

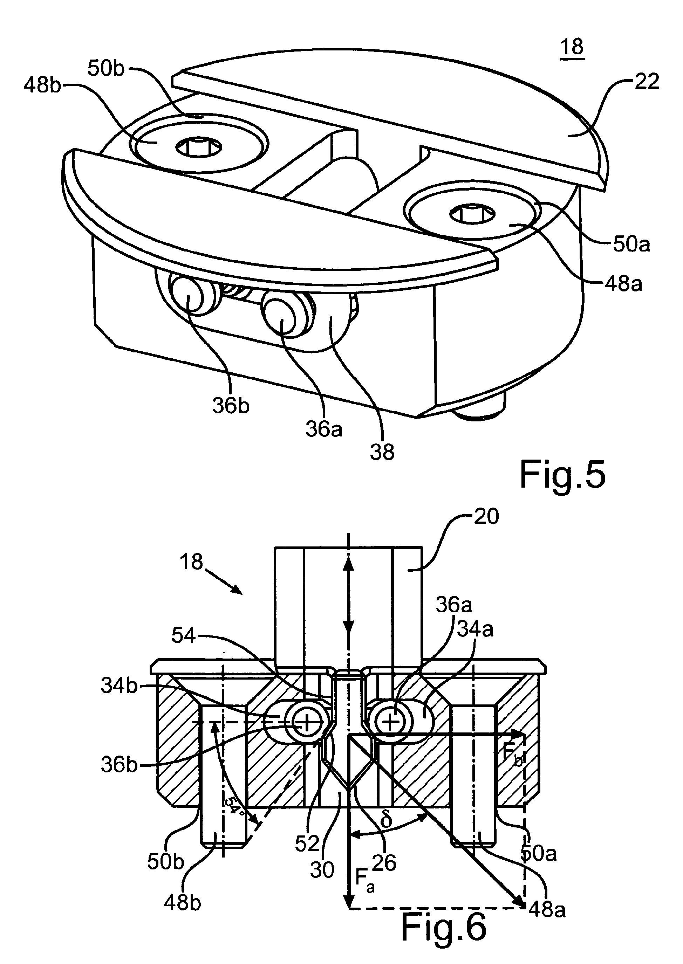

Fig. 5 zeigt eine Spannvorrichtung 18, die mittels zweier Schrauben 48a, 48b, die durch zwei Durchgangsbohrungen 50a, 50b geführt sind, auf einer Unterlage befestigbar ist.

Fig. 6 zeigt eine zu der Spannvorrichtung 18 von Fig. 5 gehörende Querschnittsansicht mit eingeführter Haltevorrichtung 20. Der Zapfen 26 weist eine Doppelrampenform auf, wobei bei eingeführter Haltevorrichtung 20 aufgrund des Übergangsbereichs 52 des Zapfens 26 eine Haltekraft Fₐ in Richtung der Längsachse des Kanals 30 erzeugt wird. Die Spannrollen 36a, 36b werden dabei mit einer Kraft F_{b} an die Leibungen 54 (Ende jeweiliges Langloch), in denen die Spannrollen 36a, 36b geführt sind, gedrückt. Bei einem Winkel δ von beispielsweise 54° errechnet sich die Haltekraft Fₐ zu: Fₐ = F_{b}/tan δ. Bei einer beispielhaft angenommenen Kraft F_{b} = 50 N errechnet sich Fₐ zu 36,33 N. Wie sich aus dieser Formel ergibt, kann durch die Veränderung des Winkels δ, das heißt durch Veränderung des Übergangsbereichs 52 hinsichtlich Länge und Kontur eine andere Haltekraft Fₐ realisiert werden. Dasselbe gilt selbstverständlich, wenn der Zapfen 26 ein Zapfen eines Einspannguts ist.

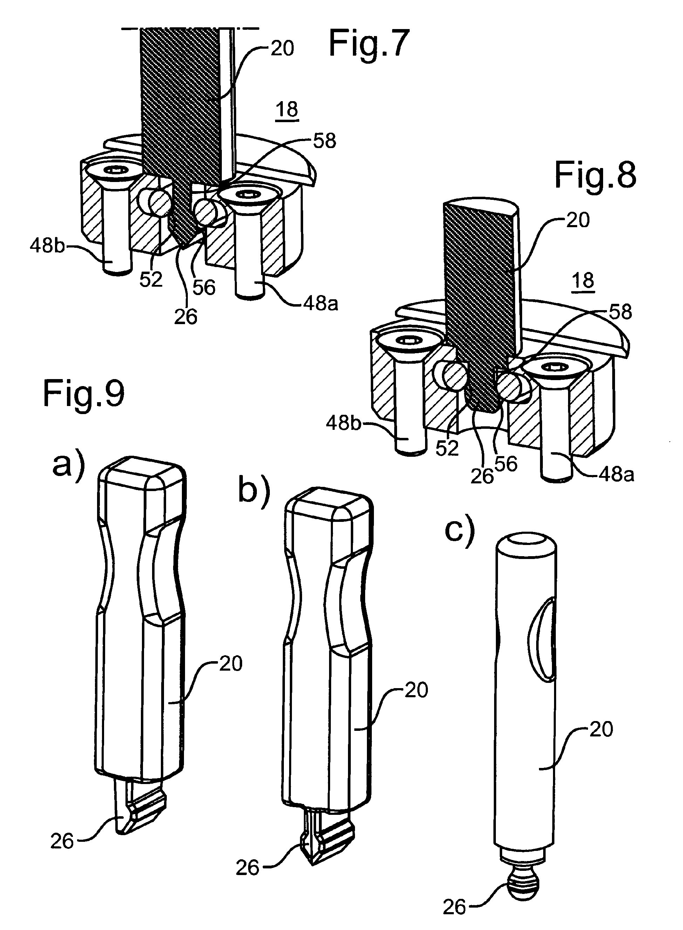

Fig.7 und Fig. 8 zeigen Kombinationen aus Spannvorrichtungen 18 und Haltevorrichtungen 20, wobei gemäß Fig. 7 der Zapfen 26 doppelrampenförmig und gemäß Fig.8 rund ausgebildet ist. Wiederum definiert der Übergangsbereich 52 zwischen einem Bereich 56 mit maximalem Durchmesser und einem Bereich 58 mit Normdurchmesser die Haltekraft Fₐ.

Fig. 9 zeigt beispielhaft drei unterschiedliche Zapfenformen, die an einer beliebigen Haltevorrichtung 20 oder einem Einspanngut (nicht dargestellt) zum Fixieren eines bzw. des Einspannguts mittels einer Spannvorrichtung 18 zusammenwirken können. Dabei weist der in Fig. 9a dargestellte Zapfen 26 eine Halbrampenform, der Zapfen 26 gem. Fig. 9b eine Doppelrampenform und der Zapfen gem. Fig. 9c eine runde Form auf. Weitere Formen, beispielsweise Pyramidenform oder Kegelform, sind ebenso möglich.

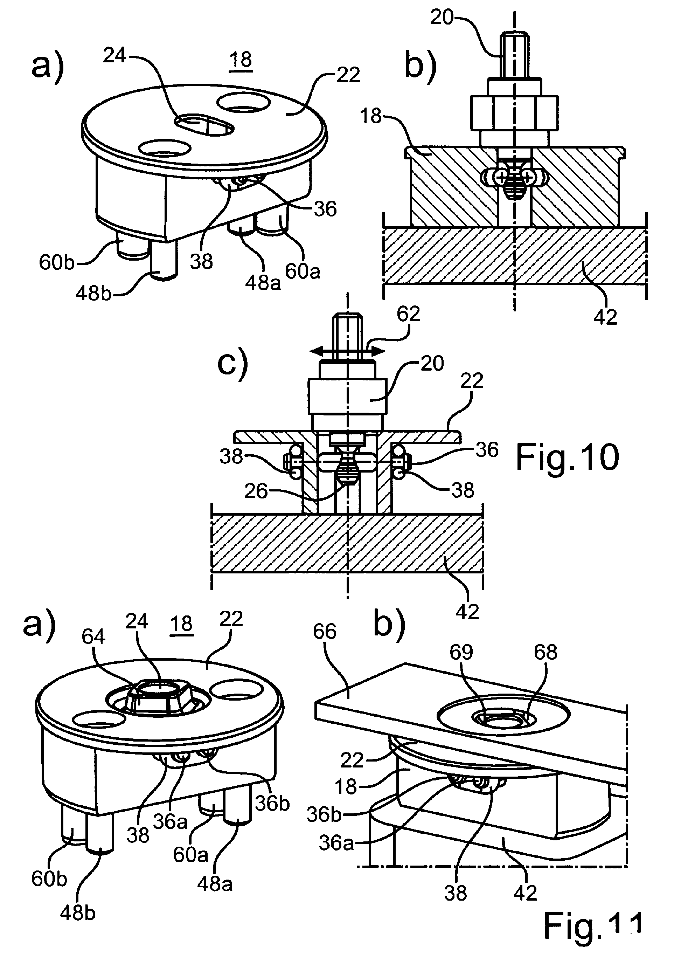

Bei der in Fig. 10 dargestellten Spannvorrichtung 18 ist die Einführöffnung 24 als Langloch ausgeführt, wodurch ein Freiheitsgrad in Richtung des Pfeils 62 von Fig. 10c erzielt wird. Damit erfolgt eine Zentrierung nur bezüglich des schmaleren Durchmessers der Einführöffnung 24, siehe Fig. 10b. Überdies ist die Spannvorrichtung 18 gemäß Fig. 10a zusätzlich zur Befestigung mit zwei Schrauben 48a, 48b mit zwei Zylinderstiften 60a, 60b zur Positionierung der Spannvorrichtung 18 versehen.

Die in Fig. 11 dargestellte Ausführungsform einer Spannvorrichtung 18 weist eine insbesondere konisch ausgeformte Zentriervorrichtung 64 zum Zentrieren eines Einspannguts 66 mit einer Bohrung oder einem Langloch 68 auf, siehe Fig. **11b****.** Besonders bevorzugt ist die Zentriervorrichtung 64 federnd in der Spannvorrichtung 18 gelagert, um so Toleranzen im Aufnahmebereich 68 des Einspannguts 66 auszugleichen.

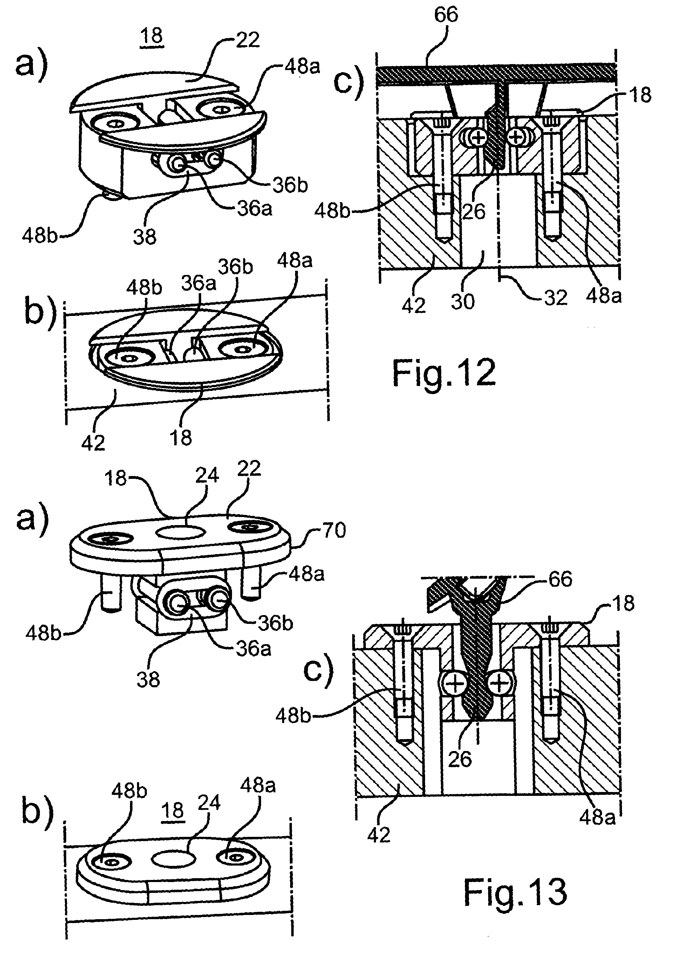

Bei der in Fig. 12 dargestellten Ausführungsform einer Spannvorrichtung 18 ist die Auflagefläche 22 für das Einspanngut 66 in einer Ausnehmung der Spannvorrichtung 18 vorgesehen. Diese ist damit zum Einführen des bereits an einem Einspanngut 66 angeformten Zapfens 26 angepasst, so dass das Einspanngut 66 an die Auflagefläche 22 gepresst wird. Dabei kann die Ausnehmung so ausgeführt sein, dass das Einspanngut 66 zentriert werden kann.

Bei der in Fig. 13 dargestellten Spannvorrichtung 18 ist zur Anpassung an das Einspanngut 66 ein Aufbau 70 vorgesehen, durch dessen Höhe eine Anpassung an die Position des Zapfens 26 des Einspannguts 66 ermöglicht wird.

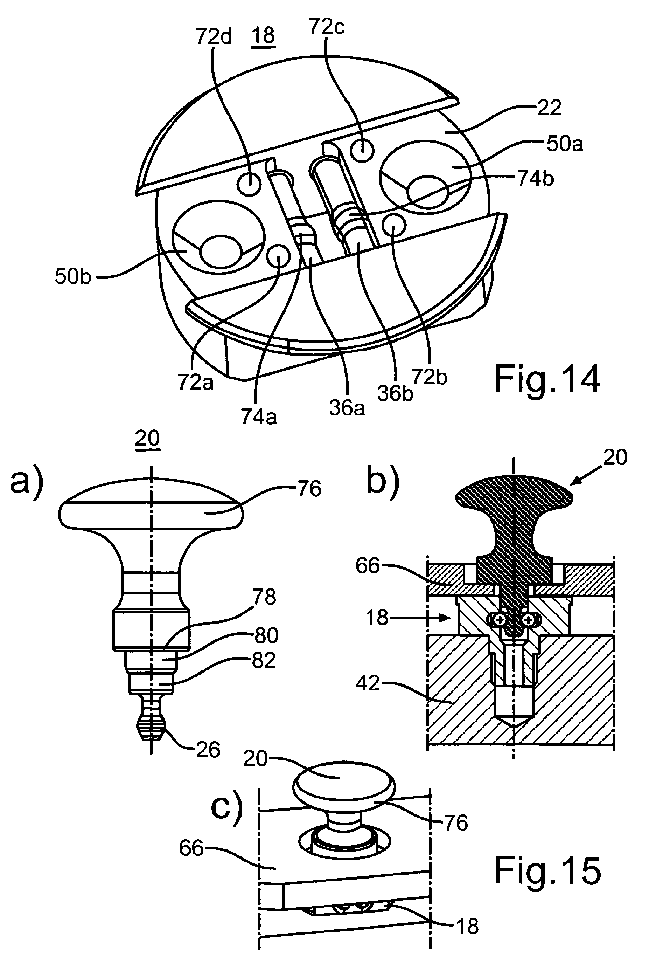

Bei der in Fig. 14 dargestellten Ausführungsform einer Spannvorrichtung 18 sind auf der Auflagefläche 22 vier optische Kontrollpunkte 72a bis 72d vorgesehen, die zusammen eine Ebene definieren und die so eine Lage- und Positionsüberprüfung der Spannvorrichtung 18 ermöglichen. Die optischen Kontrollpunkte zeichnen sich durch ihre Farbgestaltung aus, so dass durch einen Schwarz/ Weiß-Scanvorgang die Position der Kontrollpunkte 72a bis 72d photometrisch erfassbar ist. Weiterhin weisen die Spannrollen 36a, 36b in ihrem Mittenabschnitt einen Bereich 74a, 74b mit größerem Durchmesser auf, wodurch eine sichere Fixierung eines verkantet einführten Zapfens 26 ermöglicht wird. Durch den vergrößerten Durchmesser des Mittenbereichs wird eine punktförmige Auflage - anstelle einer flächenförmigen Auflage - ermöglicht.

In einer nicht dargestellten Ausführungsform einer Spannvorrichtung wird mittels Madenschrauben in einer Stützvorrichtung befestigt.

In den Figuren 15 bis 20 sind unterschiedliche Ausführungsformen von Haltevorrichtungen 22 dargestellt. Diese ermöglichen ein Einspannen eines Einspannguts 66 unter Verwendung eines Spannhalters 18, ohne dass das Einspanngut 66 selbst mit einem Zapfen 26 ausgestattet sein müßte.

Die in Fig. 15 dargestellte Haltevorrichtung 20 umfasst einen Griff 76, über den eine Bedienperson Druck auf die Haltevorrichtung 20 zum Einführen des Zapfens 26 zwischen die beiden Spannrollen 36a, 36b ausüben kann. Das Einspanngut 66 wird mittels einer Klemmfläche 78 zwischen die Haltevorrichtung 20 und die Spannvorrichtung 18 geklemmt. Ein Abschnitt 80 kann zur Zentrierung im Einspanngut 66 verwendet werden, wohingegen ein Abschnitt 82 zur Zentrierung in der Spannvorrichtung 18 verwendet werden kann.

Die in Fig. 16 dargestellte Ausführungsform einer Haltevorrichtung 20 weist ein Außengewinde 84 zum Eindrehen in ein entsprechendes Innengewinde eines Einspannguts 66 auf. Ein Abschnitt 86 kann zur Richtungszentrierung im Einspanngut 66 verwendet werden. Eine angefräste Schlüsselweite 88 ermöglicht ein Einschrauben der Spannvorrichtung 20 in das Einspanngut 66. Ein Abschnitt 90 kann zur Richtungszentrierung in der Spannvorrichtung 18 verwendet werden. Wie sich aus Fig. 16b ergibt, ist die Haltevorrichtung 20 derart ausgelegt, dass das Einspanngut 66 auf der Auflagefläche 22 der Spannvorrichtung 18 bei in der Spannvorrichtung 18 eingeführtem Zapfen 26 der Haltevorrichtung 20 aufliegt.

Die in Fig. 17 dargestellte Ausführungsform einer Haltevorrichtung 20 ermöglicht - im Gegensatz zu der in Fig. 16 dargestellten Ausführungsform - keine Auflage des Einspannguts 66 auf der Auflagefläche 22 der Spannvorrichtung 18.

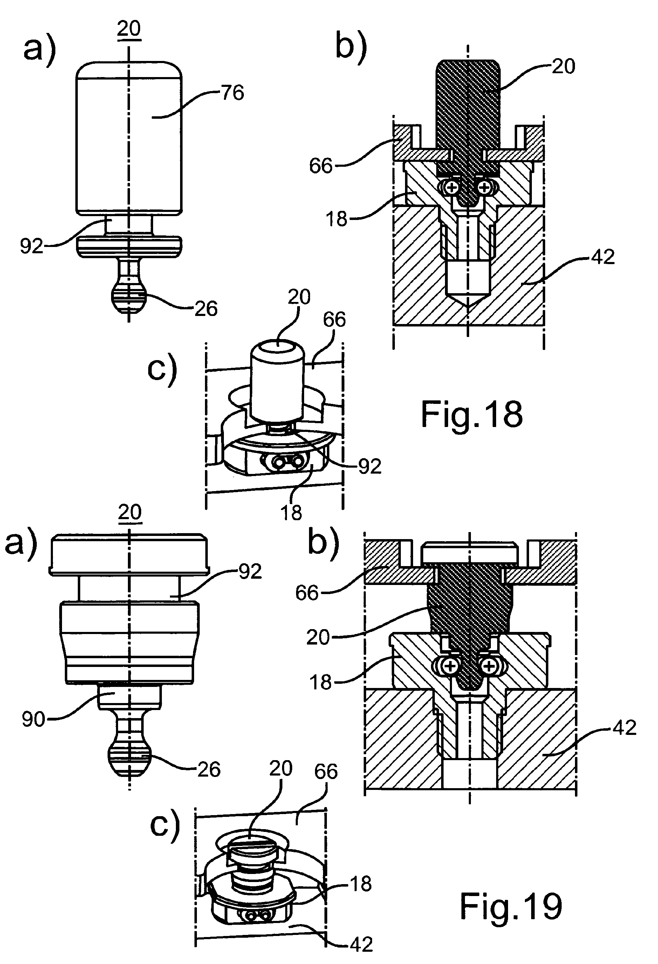

Fig. 18 zeigt eine Ausführungsform einer Haltevorrichtung 20, die eine Nut 92 aufweist, in die das Einspanngut 66 eingehängt werden kann. Dabei ist der Durchmesser und die Breite der Nut 92 auf das Einspanngut 66 abstimmbar.

In Fig. 19 ist eine weitere Ausführungsform einer Haltevorrichtung 20 mit einer Nut 92 dargestellt, wobei diese einen Abschnitt 90 zur Richtungszentrierung in einer Spannvorrichtung 18 umfasst.

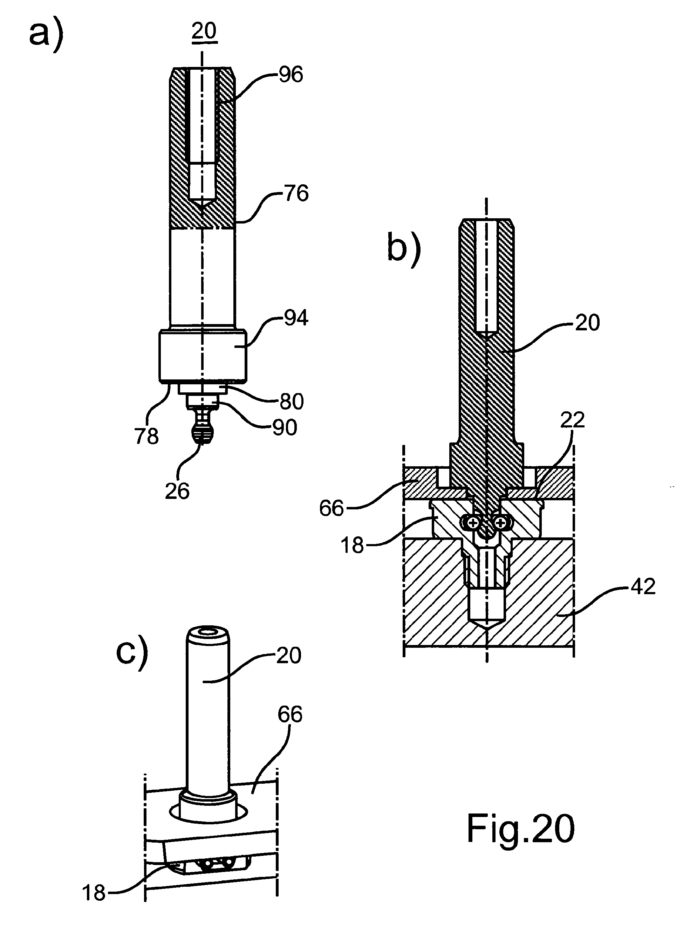

Die in Fig. 20 dargestellte Ausführungsform einer Haltevorrichtung 20 ermöglicht das Einklemmen eines Einspannguts 66 zwischen einer Klemmfläche 78 der Haltevorrichtung 20 und der Auflagefläche 22 der Spannvorrichtung 18. Ein Abschnitt 90 kann zur Richtungszentrierung in der Spannvorrichtung 18 vorgesehen sein. Ein Abschnitt 80 kann hinsichtlich Höhe und Durchmesser auf das Einspanngut 66 abgestimmt sein, so dass der Abschnitt 80 zur Zentrierung in einem Einspanngut 66 verwendet werden kann. Ein Abschnitt 94 dient zur Definition der Klemmfläche 78. Ein Abschnitt 76 kann als Griff verwendet werden. Ein Innengewinde 96 kann zur Befestigung der Haltevorrichtung 20 in einer gemeinsamen Halteplatte für mehrere Haltevorrichtungen 20 verwendet werden. Dadurch können mehrere Haltevorrichtungen 20 in einem Montagevorgang zur Befestigung des Einspannguts 66 verwendet werden.

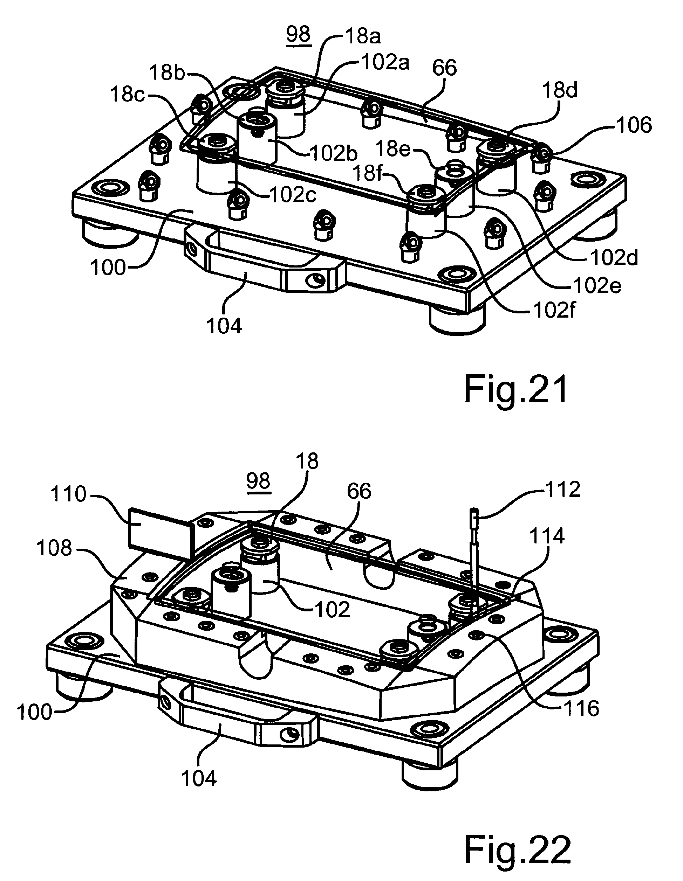

Fig. 21 zeigt ein erstes Ausführungsbeispiel einer erfindungsgemäßen Lagervorrichtung 98. Diese umfasst eine Stützfläche 100 zur Montage einer Vielzahl von Spannvorrichtungen 18a bis 18f zum Fixieren eines Einspannguts 66. Jede Spannvorrichtung 18a bis 18f ist über eine Höhenausgleichsvorrichtung 102a bis 102f mit der Stützfläche 100 verbunden. Die Höhenausgleichsvorrichtungen 102a bis 102f dienen zur Anpassung an die Form des Einspannguts 66 und sind ihrerseits, bevorzugt über eine Schraubverbindung, mit der Stützfläche 100 gekoppelt. Mit Bezug auf die Darstellungen von Spannvorrichtungen 18 und Haltevorrichtungen 20 in den Figuren 3 bis 20 stellen die Höhenausgleichsvorrichtungen 102 das Element 42 dar. Die Höhe der Höhenausgleichsvorrichtungen 102 wird bevorzugt durch die Bearbeitungsverfahren Drehen und/oder Schleifen exakt eingestellt. Für einen einfachen Transport weist eine erfindungsgemäße Lagervorrichtung einen Griff 104 auf. In der Darstellung von Fig. 21 sind mehrere Vorrichtungen 106 dargestellt, die optische Referenzpunkte für eine optische Vermessung repräsentieren.

Während die Höhenausgleichsvorrichtungen 102 generell dem Ausgleich in einer ersten Raumrichtung, vorliegend der Höhe, dienen, können stattdessen Ausgleichsvorrichtungen für beliebe Raumrichtungen und/oder Raumwinkel vorgesehen sein.

Die in Fig. 22 dargestellte Ausführungsform einer erfindungsgemäßen Lagervorrichtung 98 umfasst an das Einspanngut 66 angepasste Messflächen 108, so dass unter Verwendung eines Haarlineals 110 das Einspanngut 66 komplett umlaufend auf Bauteilunter- oder überstand geprüft werden kann. Mittels eines Prüfstifts 112 kann eine Lehrenluft 114, das heißt ein definierter Abstand zwischen dem Einspanngut 66 und der Messfläche 108 geprüft werden, um die Ausdehnung des Einspannguts 66, das heißt ob zu groß oder zu klein, zu überprüfen. Wiederum sind optische Referenzpunkte vorgesehen, die in Fig. 22 mit 116 bezeichnet sind.

## Patentansprüche

1. Lagervorrichtung (98) zum Fixieren eines Einspannguts (66) zum Zwecke der Vermessung des Einspannguts (66), wobei das Einspanngut (66) mit mindestens einem Fixierzapfen (26) gekoppelt ist, wobei der Fixierzapfen (26) von seinem distalen Ende beabstandet einen Bereich mit einem geringeren Durchmesser aufweist als ein Bereich seines distalen Endes, umfassend:
- mindestens eine Spannvorrichtung (18) mit
-- einer Einführseite mit einer Einführöffnung (24) für den Fixierzapfen (26);
-- einer Montageseite zur Montage der Spannvorrichtung (18) auf einer Stützfläche (42, 100);
-- einem sich an die Einführöffnung (24) anschließenden Kanal (30), der sich zumindest in die Spannvorrichtung (18) hinein erstreckt, wobei der Kanal (30) eine Längsachse (32) und einen Kanaldurchmesser in einer ersten Richtung senkrecht zu seiner Längsachse (32) aufweist;
-- mindestens einer Riegelvorrichtung (36a, 36b), die in der ersten Richtung senkrecht zur Kanalachse (32) derart beweglich gelagert ist, dass sie mit einem kanalseitigen Ende in den Kanal (30) eindringen kann; und
-- mindestens einer Federvorrichtung (38), die mit der mindestens einen Riegelvorrichtung (36a, 36b) gekoppelt ist, um die mindestens eine Riegelvorrichtung (36a, 36b) in die erste Richtung senkrecht zur Kanalachse (32) mit einer Federkraft zu beaufschlagen;
- eine Stützfläche (42, 100) zur Montage der mindestens einen Spannvorrichtung (18) auf ihrer Montageseite; und
- mindestens eine der mindestens einen Spannvorrichtung (18) zugeordnete Richtungs- und/oder Winkelausgleichsvorrichtung (102a bis 102f) zur Anpassung der Position der Einführöffnung (24) der mindestens einen Spannvorrichtung (18) an die Position des zugeordneten Fixierzapfens (26), wobei die Richtungs- und/oder Winkelausgleichsvorrichtung (102a bis 102f) zwischen die mindestens eine Spannvorrichtung (18) und die Stützfläche (42, 100) gekoppelt ist.

2. Lagervorrichtung (98) nach Anspruch 1,
**dadurch gekennzeichnet,**
**dass** die Richtungs- und/oder Winkelausgleichsvorrichtung (102a bis 102f) eine Höhenausgleichsvorrichtung umfasst.

3. Lagervorrichtung (98) nach einem der Ansprüche 1 oder 2,
**dadurch gekennzeichnet,**
**dass** eine erste (36a) und eine zweite Riegelvorrichtung (36b) vorgesehen sind, die auf gegenüberliegenden Seiten des Kanals (30) in der ersten Richtung angeordnet sind, wobei der ersten Riegelvorrichtung (36a) eine erste (38) und der zweiten Riegelvorrichtung (36b) eine zweite Federvorrichtung (38) zugeordnet ist.

4. Lagervorrichtung (98) nach einem der vorhergehenden Ansprüche,
**dadurch gekennzeichnet,**
**dass** die mindestens eine Riegelvorrichtung (36a; 36b) als Walze oder als Kugel ausgeführt ist.

5. Lagervorrichtung (98) nach einem der vorhergehenden Ansprüche,
**dadurch gekennzeichnet,**
**dass** die mindestens eine Federvorrichtung (38) als elastischer Ring, insbesondere als Gummiring, als Spiralfeder, als Blattfeder oder als elastischer Block ausgeführt ist oder auf der Basis von Druckluft realisiert ist und insbesondere ein mindestens Druckluftventil umfasst.

6. Lagervorrichtung (98) nach einem der vorhergehenden Ansprüche,
**dadurch gekennzeichnet,**
**dass** eine erste und eine zweite, als Walze ausgebildete Riegelvorrichtungen (36a; 36b) vorgesehen sind, wobei die erste und die zweite Federvorrichtung (38) als mindestens ein elastischer Ring ausgeführt sind, der in einer jeweiligen Nut der jeweiligen Walze geführt ist.

7. Lagervorrichtung (98) nach einem der vorhergehenden Ansprüche,
**dadurch gekennzeichnet,**
**dass** auf der Montageseite eine Befestigungsvorrichtung (27) ausgebildet ist, insbesondere mindestens ein Gewinde.

8. Lagervorrichtung (98) nach einem der vorhergehenden Ansprüche,
**dadurch gekennzeichnet,**
**dass** die Spannvorrichtung (18) mindestens zwei Durchgangsbohrungen (50a, 50b) aufweist zur Befestigung der Spannvorrichtung (18) auf der Lagervorrichtung (98) mittels Befestigungsmitteln, insbesondere Schrauben (48a, 48b).

9. Lagervorrichtung (98) nach einem der vorhergehenden Ansprüche,
**dadurch gekennzeichnet,**
**dass** an der Einführseite der Spannvorrichtung (18) eine Freimachung (44) vorgesehen ist, um ein planares Verschieben und Drehen des Einspannguts (66) mit dem Fixierzapfen (26) oder der Haltevorrichtung (20) mit dem Fixierzapfen (26) relativ zur Spannvorrichtung (18) zu ermöglichen.

10. Lagervorrichtung (98) nach einem der vorhergehenden Ansprüche,
**dadurch gekennzeichnet,**
**dass** an der Einführseite der Spannvorrichtung (18) eine Zentriervorrichtung (64) für das Einspanngut (66) mit dem Fixierzapfen (26) oder die Haltevorrichtung (20) mit dem Fixierzapfen (26) vorgesehen ist.

11. Lagervorrichtung (98) nach Anspruch 10,
**dadurch gekennzeichnet,**
**dass** die Zentriervorrichtung (64) federnd gelagert ist.

12. Lagervorrichtung (98) nach einem der vorhergehenden Ansprüche,
**dadurch gekennzeichnet,**
**dass** der Kanalquerschnitt (24) kreisförmig oder länglich ausgebildet ist.

13. Lagervorrichtung (98) nach einem der vorhergehenden Ansprüche,
**dadurch gekennzeichnet,**
**dass** die mindestens eine Riegelvorrichtung (36a, 36b) als Walze ausgebildet, wobei die Walze außerhalb eines Mittenbereichs (74a; 74b) einen konstanten Durchmesser aufweist und lediglich im Mittenbereich einen kugelförmigen Bereich mit einem Durchmesser kleiner oder gleich dem konstanten Durchmesser, wobei die Walze an den kugelförmigen Bereich anschließend auf jeder Seite des kugelförmigen Bereichs einen Bereich mit einem Durchmesser, der geringer ist als der konstante Durchmesser, aufweist.

14. Lagervorrichtung (98) nach einem der vorhergehenden Ansprüche,
**dadurch gekennzeichnet,**
**dass** auf der Einführseite mindestens vier optische Kontrollpunkte (72a bis 72d) angeordnet sind, die mit der Längsachse (32) des Kanals (30) korreliert sind.

15. Lagervorrichtung (98) nach einem der vorhergehenden Ansprüche,
**dadurch gekennzeichnet,**
**dass** das Einspanngut (66) mindestens einen Fixierzapfen (26) aufweist.

16. Lagervorrichtung (98) nach einem der vorhergehenden Ansprüche,
**dadurch gekennzeichnet,**
**dass** der Übergangsbereich (52) von einem Bereich des distalen Endes des Fixierzapfens (26) mit maximalem Durchmesser zu einem Bereich mit Normdurchmesser eine vorgebbare Länge und eine vorgebbare Kontur, insbesondere Pyramidenform, Kugelform, Rampenform, Kegelform, aufweist.

17. Lagervorrichtung (98) nach einem vorhergehenden Ansprüche,
**dadurch gekennzeichnet,**
**dass** der Fixierzapfen (26) im Wesentlichen rund, halbrund, keilförmig, doppelkeilförmig, rampenförmig oder doppelrampenförmig ausgebildet ist.

18. Lagervorrichtung (98) nach einem der vorhergehenden Ansprüche,
**dadurch gekennzeichnet,**
**dass** die Lagervorrichtung (98) weiterhin mindestens eine Haltevorrichtung (20) mit einem Fixierzapfen (26) umfasst.

19. Lagervorrichtung (98) nach Anspruch 18,
**dadurch gekennzeichnet,**
**dass** die Haltevorrichtung (20) eine Koppelvorrichtung zum Koppeln mit dem Einspanngut (66) aufweist.

20. Lagervorrichtung (98) nach Anspruch 19,
**dadurch gekennzeichnet,**
**dass** die Koppelvorrichtung ein Gewinde (84) und/oder einen Zentrierbund (86) umfasst.

21. Lagervorrichtung (98) nach Anspruch 19,
**dadurch gekennzeichnet,**
**dass** die Koppelvorrichtung eine Nut (92) zum Einhängen des Einspannguts (66) aufweist.

22. Lagervorrichtung (98) nach Anspruch 19,
**dadurch gekennzeichnet,**
**dass** die Koppelvorrichtung eine Klemmfläche (78) zum Klemmen des Einspannguts (66) zwischen die Haltevorrichtung (20) und die Spannvorrichtung (18) umfasst.

23. Lagervorrichtung (98) nach Anspruch 19,
**dadurch gekennzeichnet,**
**dass** die Koppelvorrichtung eine Klemmvorrichtung, insbesondere eine Klammer, zum Klemmen des Einspannguts (66) an die Haltevorrichtung (20) umfasst.

## Claims

1. Storing device (98) for fixing a clamping good (66) for the purpose of measuring the clamping good (66), wherein the clamping good (66) is coupled to at least one fixing stud (26), wherein the fixing stud (26) has a region with a lower diameter spaced from its distal end than a region of its distal end, comprising:
- at least one clamping device (18) including
- an insertion side with an insertion opening (24) for the fixing stud (26);
- a mounting side for mounting the clamping device (18) on a supporting surface (42, 100);
- a channel (30) adjoining the insertion opening (24), which extends at least into the clamping device (18), wherein the channel (30) has a longitudinal axis (32) and a channel diameter in a first direction perpendicular to its longitudinal axis (32);
- at least one latch device (36a, 36b) supported movably in the first direction perpendicular to the channel axis (32) such that it can penetrate the channel (30) with a channel-side end; and
- at least one spring device (38) coupled to the at least one latch device (36a, 36b) in order to load the at least one latch device (36a, 36b) with spring force in the first direction perpendicular to the channel axis (32);
- a supporting surface (42, 100) for mounting the at least one clamping device (18) on its mounting side; and
- at least one direction and/or angle compensating device (102a to 102f) associated with the at least one clamping device (18) for adapting the position of the insertion opening (24) of the at least one clamping device (18) to the position of the associated fixing stud (26), wherein the direction and/or angle compensating device (1 02a to 102f) is coupled between the at least one clamping device (18) and the supporting surface (42, 100).

2. Storing device (98) according to claim 1,
**characterized in that**
the direction and/or angle compensating device (1 02a to 102f) includes a height compensating device.

3. Storing device (98) according to any one of claims 1 or 2,
**characterized in that**
a first (36a) and a second latch device (36b) are provided, which are disposed on opposing sides of the channel (30) in the first direction, wherein there are associated a first spring device (38) with the first latch device (36a) and a second spring device (38) with the second latch device (36b).

4. Storing device (98) according to anyone of the preceding claims,
**characterized in that**
the at least one latch device (36a; 36b) is configured as a roller or as a ball.

5. Storing device (98) according to anyone of the preceding claims,
**characterized in that**
the at least one spring device (38) is configured as an elastic ring, in particular as a rubber ring, as a coil spring, as a leaf spring or as an elastic block, or is realized based on compressed air and in particular includes at least one compressed air valve.

6. Storing device (98) according to anyone of the preceding claims,
**characterized in that**
a first and a second latch device (36a; 36b) formed as a roller are provided, wherein the first and the second spring device (38) are configured as at least one elastic ring, which is guided in a respective groove of the respective roller.

7. Storing device (98) according to anyone of the preceding claims,
**characterized in that**
a fastener (27) is formed on the mounting side, in particular at least one thread.

8. Storing device (98) according to anyone of the preceding claims,
**characterized in that**
the clamping device (18) has at least two through-bores (50a, 50b) for attaching the clamping device (18) to the storing device (98) by means of fixing means, in particular screws (48a, 48b).

9. Storing device (98) according to anyone of the preceding claims,
**characterized in that**
a recess (44) is provided on the insertion side of the clamping device (18) in order to allow planar displacing and rotating of the clamping good (66) with the fixing stud (26) or of the retaining device (20) with the fixing stud (26) relative to the clamping device (18).

10. Storing device (98) according to anyone of the preceding claims,
**characterized in that**
a centering device (64) for the clamping good (66) with the fixing stud (26) or the retaining device (20) with the fixing stud (26) is provided on the insertion side of the clamping device (18).

11. Storing device (98) according to claim 10,
**characterized in that**
the centering device (64) is resiliently supported.

12. Storing device (98) according to anyone of the preceding claims,
**characterized in that**
the channel cross-section (24) is formed circular or elongated.

13. Storing device (98) according to anyone of the preceding claims,
**characterized in that**
the at least one latch device (36a, 36b) is formed as a roller, wherein the roller has a constant diameter outside of a center region (74a; 74b) and has a spherical region with a diameter smaller than or equal to the constant diameter only in the center region, wherein the roller has a region with a diameter less than the constant diameter adjoining the spherical region on each side of the spherical region.

14. Storing device (98) according to anyone of the preceding claims,
**characterized in that**
at least four optical control points (72a to 72d) are disposed on the insertion side, which are correlated with the longitudinal axis (32) of the channel (30).

15. Storing device (98) according to anyone of the preceding claims,
**characterized in that**
the clamping good (66) has at least one fixing stud (26).

16. Storing device (98) according to anyone of the preceding claims,
**characterized in that**
the transition region (52) from a region of the distal end of the fixing stud (26) with maximum diameter to a region with standard diameter has a presettable length and a presettable contour, in particular pyramid shape, ball shape, ramp shape, cone shape.

17. Storing device (98) according to anyone of the preceding claims,
**characterized in that**
the fixing stud (26) is formed substantially round, semicircular, wedge-shaped, double-wedge-shaped, ramp-shaped or double-ramp-shaped.

18. Storing device (98) according to anyone of the preceding claims,
**characterized in that**
the storing device (98) further includes at least one retaining device (20) with a fixing stud (26).

19. Storing device (98) according to claim 18,
**characterized in that**
the retaining device (20) has a coupling device for coupling to the clamping good (66).

20. Storing device (98) according to claim 19,
**characterized in that**
the coupling device includes a thread (84) and/or a centering collar (86).

21. Storing device (98) according to claim 19,
**characterized in that**
the coupling device has a groove (92) for hooking in the clamping good (66).

22. Storing device (98) according to claim 19,
**characterized in that**
the coupling device includes a clamping surface (78) for clamping the clamping good (66) between the retaining device (20) and the clamping device (18).

23. Storing device (98) according to claim 19,
**characterized in that** the coupling device includes a clamping device, in particular a clamp, for clamping the clamping good (66) to the retaining device (20).

## Revendications

1. Dispositif de stockage (98), destiné à fixer un produit à enserrer (66), dans le but de mesurer le produit à enserrer (66), moyennant quoi le produit à enserrer (66) est couplé avec au moins une cheville de fixation (26), moyennant quoi la cheville de fixation (26) présente, éloignée de son extrémité distale, une zone d'un diamètre plus faible qu'une zone de son extrémité distale, comprenant :
- au moins un dispositif de serrage (18) avec
- un côté d'insertion avec une ouverture d'insertion (24) pour la cheville de fixation (26) ;
- un côté montage, destiné au montage du dispositif de serrage (18) sur une surface d'appui (42, 100) ;
- un passage (30), qui se raccorde à l'ouverture d'insertion (24), qui s'étend au moins dans le dispositif de serrage (18), moyennant quoi le passage (30) présente un axe longitudinal (32) et un diamètre de passage, dans une première direction, verticalement par rapport à son axe longitudinal (32) ;
- au moins un dispositif de verrouillage (36a, 36b), qui est logé de manière mobile dans la première direction, verticalement par rapport à l'axe (32) du passage, de telle sorte qu'il peut pénétrer, avec une extrémité côté passage, dans le passage (30) et
- au moins un dispositif formant ressort (38), qui est couplé avec le au moins un dispositif de verrouillage (36a, 36b), pour amener une tension de ressort au au moins un dispositif de verrouillage (36a, 36b), dans la première direction, verticalement par rapport à l'axe (32) du passage ;
- une surface d'appui (42, 100), destinée au montage du au moins un dispositif de serrage (18) sur son côté montage et
- au moins l'un des dispositifs de direction et / ou de compensation angulaire (102a à 102f), affecté au au moins un dispositif de serrage (18), destiné à adapter la position de l'ouverture d'insertion (24) du au moins un dispositif de serrage (18) à la position de la cheville de fixation (26) affectée, moyennant quoi le dispositif de direction et / ou de compensation angulaire (102a à 102f) est couplé entre le au moins un dispositif de serrage (18) et la surface d'appui (42, 100).

2. Dispositif de stockage (98) selon la revendication 1,
**caractérisé en ce**
**que** le dispositif de direction et / ou de compensation angulaire (102a à 102f) comprend un dispositif de compensation de hauteur.

3. Dispositif de stockage (98) selon l'une des revendications 1 ou 2,
**caractérisé en ce**
**qu'**un premier (36a) et un deuxième dispositif de verrouillage (36b) sont prévus, qui sont disposés sur des côtés opposés du passage (30), dans la première direction, moyennant quoi un premier dispositif formant ressort (38) est affecté au premier dispositif de verrouillage (36a) et un deuxième (38) au deuxième dispositif de verrouillage (36b).

4. Dispositif de stockage (98) selon l'une des revendications précédentes,
**caractérisé en ce**
**que** le au moins un dispositif de verrouillage (36a ; 36b) est fabriqué sous forme de cylindre ou de boule.

5. Dispositif de stockage selon l'une des revendications précédentes,
**caractérisé en ce**
**que** le au moins un dispositif formant ressort (38) est fabriqué sous forme de bague élastique, en particulier sous forme de bague en caoutchouc, de ressort à boudin, de ressort à lames ou de bloc élastique ou est réalisé au moyen d'air comprimé et comprend, en particulier, au moins une valve pneumatique.

6. Dispositif de stockage (98) selon l'une des revendications précédentes,
**caractérisé en ce**
**qu'**un premier et un deuxième dispositif de verrouillage (36a ; 36b), constitués en tant que cylindre, sont prévus, moyennant quoi le premier et le deuxième dispositif formant ressort (38) sont fabriqués au moins sous forme d'une bague élastique, qui est guidée dans une rainure respective du cylindre respectif.

7. Dispositif de stockage (98) selon l'une des revendications précédentes,
**caractérisé en ce**
**qu'**un dispositif de fixation (27) est constitué sur le côté montage, en particulier au moins un filetage.

8. Dispositif de stockage (98) selon l'une des revendications précédentes,
**caractérisé en ce**
**que** le dispositif de serrage (18) présente au moins deux alésages débouchants (50a, 50b), destinés à la fixation du dispositif de serrage (18) sur le dispositif de stockage (98) au moyen d'éléments de fixation, en particulier de vis (48a, 48b).

9. Dispositif de stockage (98) selon l'une des revendications précédentes,
**caractérisé en ce**
**qu'**un dégagement (44) est prévu sur le côté d'insertion du dispositif de serrage (18), pour permettre un déplacement et une rotation plans du produit à enserrer (66) avec la cheville de fixation (26) ou du dispositif de retenue (20) avec la cheville de fixation (26) par rapport au dispositif de serrage (18).

10. Dispositif de stockage (98) selon l'une des revendications précédentes,
**caractérisé en ce**
**qu'**un dispositif de centrage (64) est prévu, sur le côté d'insertion du dispositif de serrage (18), pour le produit à enserrer (66) avec la cheville de fixation (26) ou le dispositif de retenue (20) avec la cheville de fixation (26).

11. Dispositif de stockage (98) selon la revendication 10,
**caractérisé en ce**
**que** le dispositif de centrage (64) est logé élastiquement.

12. Dispositif de stockage (98) selon l'une des revendications précédentes,
**caractérisé en ce**
**que** la section du passage (24) est constituée de manière circulaire ou oblongue.

13. Dispositif de stockage (98) selon l'une des revendications précédentes,
**caractérisé en ce**
**que** le au moins un dispositif de verrouillage (36a, 36b) est constitué sous forme de cylindre, moyennant quoi le cylindre présente, en dehors d'une zone centrale (74a ; 74b), un diamètre constant et, uniquement dans la zone centrale, une zone sphérique d'un diamètre inférieur ou égal au diamètre constant, moyennant quoi le cylindre présente, sur la zone sphérique puis sur chaque côté de la zone sphérique, une zone d'un diamètre inférieur au diamètre constant.

14. Dispositif de stockage (98) selon l'une des revendications précédentes,
**caractérisé en ce**
**qu'**au moins quatre points optiques de contrôle (72a à 72d) sont disposés sur le côté d'insertion, qui sont en corrélation avec l'axe longitudinal (32) du passage (30).

15. Dispositif de stockage (98) selon l'une des revendications précédentes,
**caractérisé en ce**
**que** le produit à enserrer (66) présente au moins une cheville de fixation (26).

16. Dispositif de stockage (98) selon l'une des revendications précédentes,
**caractérisé en ce**
**que** la zone de transition (52) présente, d'une zone de l'extrémité distale de la cheville de fixation (26), avec un diamètre maximum, à une zone avec un diamètre normal, une longueur pouvant être affectée et un profil pouvant être affecté, en particulier une forme pyramidale, une forme sphérique, une forme de rampe, une forme conique.

17. Dispositif de stockage (98) selon l'une des revendications précédentes,
**caractérisé en ce**
**que** la cheville de fixation (26) est constituée essentiellement de manière ronde, demi-ronde, en forme de coin, en forme de double coin, en forme de rampe ou en forme de double rampe.

18. Dispositif de stockage (98) selon l'une des revendications précédentes,
**caractérisé en ce**
**que** le dispositif de stockage (98) comprend, en outre, au moins un dispositif de retenue (20) avec une cheville de fixation (26).

19. Dispositif de stockage (98) selon la revendication 18,
**caractérisé en ce**
**que** le dispositif de retenue (20) présente un dispositif de couplage, destiné au couplage avec le produit à enserrer (66).

20. Dispositif de stockage (98) selon la revendication 19,
**caractérisé en ce**
**que** le dispositif de couplage comprend un filetage (84) et / ou un collet de centrage (86).

21. Dispositif de stockage (98) selon la revendication 19,
**caractérisé en ce**
**que** le dispositif de couplage présente une rainure (92), destinée à suspendre le produit à enserrer (66).

22. Dispositif de stockage (98) selon la revendication 19,
**caractérisé en ce**
**que** le dispositif de couplage comprend une surface de serrage (78), destinée à serrer le produit à enserrer (66) entre le dispositif de retenue (20) et le dispositif de serrage (18).

23. Dispositif de stockage (98) selon la revendication 19,
**caractérisé en ce**
**que** le dispositif de couplage comprend un dispositif de serrage, en particulier une bride de fixation, destinée à serrer le produit à enserrer (66) sur le dispositif de retenue (20).
